# EUROPÄISCHE PATENTSCHRIFT

(11) **EP 3 251 480 B1**
(45) Veröffentlichungstag und Bekanntmachung des Hinweises auf die Patenterteilung: **20.03.2019**
(21) Anmeldenummer: 17167081.3
(22) Anmeldetag: 19.04.2017
(51) Int. Cl.: A01B 59/00, B62D 13/02

(54) **ANHÄNGER UND GESPANN MIT EINEM ZUGFAHRZEUG UND ANHÄNGER**
TRAILER AND CONFIGURATION COMPRISING A TRAILER AND A TOWING VEHICLE
REMORQUE ET ENSEMBLE ATTELÉ COMPRENANT UN VÉHICULE TRACTEUR ET UNE REMORQUE

(30) Priorität: 26.04.2016 DE 102016107676
(43) Veröffentlichungstag der Anmeldung: 06.12.2017
(73) Patentinhaber: Fliegl Agrartechnik GmbH, 84453 Mühldorf am Inn (DE)
(72) Erfinder: Fliegl, Josef, 84453 Mühldorf am Inn (DE)
(74) Vertreter: Hofstetter, Schurack & Partner

(56) Entgegenhaltungen:
- EP-A2- 0 350 008
- CH-A- 166 631
- DE-A1- 3 919 561
- DE-T2- 60 305 348
- US-A1- 2007 090 625
- US-A1- 2011 062 680

## Beschreibung

Die Erfindung betrifft einen Anhänger, insbesondere einen landwirtschaftlichen Anhänger, der im Oberbegriff des Patentanspruchs 1 angegebenen Art. Des Weiteren betrifft die Erfindung ein Gespann mit einem Zugfahrzeug und einem derartigen Anhänger.

Landwirtschaftliche Anhänger, welche mit einem Zugfahrzeug, beispielsweise einem Traktor oder dergleichen, gekoppelt und von diesem gezogen werden können, sind an sich bekannt. Je nach Situation kann es dabei entweder wünschenswert sein, dass der Anhänger spurgetreu dem Zugfahrzeug hinterher geführt wird, sodass keine zusätzlichen Fahrbahnen beziehungsweise Fahrspuren auf einem Feld entstehen. Andererseits kann es aber auch genauso gut möglich sein, dass die Notwendigkeit besteht, das Zugfahrzeug und den Anhänger parallel zueinander versetzt, in einem sogenannten Hundegang, fahren zu lassen, bei welchem die Reifen von Zugfahrzeug und Anhänger unterschiedliche Fahrspuren befahren.

Die DE 603 05 348 T2 zeigt einen Anhänger zum Nachziehen für ein Zugfahrzeug, wobei der Anhänger einen zum Tragen einer Last ausgestalteten Rahmen aufweist. Vorderseitig am Rahmen ist eine Kupplungsvorrichtung vorgesehen, die zum Verbinden des Anhängers mit dem Zugfahrzeug ausgestaltet ist. Am Rahmen ist zudem eine lenkbare Achseinheit mit einer Achse vorgesehen, welche über eine trapezförmige Verbindung mit zwei Armen mit dem Rahmen verbunden ist. Die Achseinheit des Anhängers ist also über mehrere Drehpunkte bzw. Drehgelenke mit dem Rahmen verbunden, sodass die gesamte Achse als solche relativ zum Rahmen des Anhängers verschwenkt werden kann. Diese Art der Ausgestaltung der lenkbaren Achse beziehungsweise der lenkbaren Achseinheit ist mechanisch relativ aufwendig.

Die US 2007/0090625 A1 zeigt einen Anhänger, bei welchem sowohl eine Vorderachse als auch eine Hinterachse verschwenkbar an einem Gestell des Anhängers gelagert sind, auf welchem ein Tank angeordnet ist. An der Vorderachse ist eine Deichsel angeordnet. Die beiden schwenkbaren Achsen sind über zwei diagonal verlaufende und sich kreuzende Streben miteinander verbunden. Sobald die Vorderachse eine Lenkbewegung ausführt, führt die Hinterachse dadurch automatisch ebenfalls eine entsprechende Lenkbewegung aus. Durch die Hinterachse und das Gestell ist ein in Hochrichtung verlaufender Bolzen hindurchgeführt, infolgedessen die Hinterachse verschwenkbar ist.

Die US 2011/0062680 A1 beschreibt einen Anhänger mit lenkbarer Vorderachse und Hinterachse. An einem Gestell des Anhängers ist unterseitig ein Joch befestigt. Ein Bolzen ist durch die Hinterachse hindurchgesteckt und erstreckt sich durch zwei runde Platten und eine weitere darüber angeordnete Platte. Letztere ist an das Joch angeschweißt.

Die DE 603 05 348 T2 beschreibt einen Anhänger, bei welchem eine Achse über eine trapezförmige Verbindung verschwenkbar an einem Rahmen des Anhängers gelagert ist.

Die EP 0 350 008 A2, die DE 39 19 561 A1 und die CH 166631 A beschreiben jeweils einen Anhänger, bei welchem eine lenkbare Achse mittels eines Drehkranzes an einem Gestell des Anhängers gelagert ist

Es ist daher die Aufgabe der vorliegenden Erfindung, einen Anhänger, insbesondere einen landwirtschaftlichen Anhänger, bereitzustellen, welcher eine besonders einfache und zuverlässige Konstruktion für eine als Ganzes lenkbare Achseinheit aufweist.

Diese Aufgabe wird durch einen Anhänger, insbesondere landwirtschaftlichen Anhänger, mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Der erfindungsgemäße Anhänger, insbesondere landwirtschaftliche Anhänger, umfasst ein Fahrgestell zum Aufnehmen eines Anhängeraufbaus, wie beispielsweise ein Güllefass oder dergleichen. Des Weiteren weist der Anhänger eine an einem vorderen Bereich des Fahrgestells angeordnete Zugvorrichtung zum Verbinden des Anhängers mit einem Zugfahrzeug auf. Bei der Zugvorrichtung kann es sich beispielsweise um eine Deichsel handeln, mittels welcher der Anhänger mit einem Zugfahrzeug, wie beispielsweise einem Traktor, verbunden werden kann. Des Weiteren weist der Anhänger eine an einem hinteren Bereich des Fahrgestells angeordnete, wenigstens eine Achse aufweisende lenkbare Achseinheit auf, welche als Ganzes relativ zum Fahrgestell verschwenkbar ist. Ferner umfasst der Anhänger eine Verstelleinrichtung zum Verschwenken der Achseinheit relativ zum Fahrgestell. Zudem umfasst der Anhänger eine an einer von dem Fahrgestell abgewandten Rückseite der lenkbaren Achseinheit angeordnete Aufnahmevorrichtung, mittels welcher ein Arbeitsgerät, insbesondere eine Bodenbearbeitungsvorrichtung, am Anhänger befestigbar ist.

Um eine besonders einfache Konstruktion für die als Ganzes lenkbare Achseinheit bereitzustellen, ist es bei dem erfindungsgemäßen Anhänger vorgesehen, dass die Achseinheit mittels einer Lageranordnung am Fahrgestell gelagert ist, welche einen Drehfreiheitsgrad um eine einzige in Hochrichtung des Anhängers verlaufende Drehachse aufweist. Im Gegensatz zu dem aus der DE 603 05 348 T2 bekannten Anhänger ist es also bei dem erfindungsgemäßen Anhänger gerade nicht erforderlich, die lenkbare Achseinheit über mehrere gelenkig gelagerte Arme mit dem Fahrgestell zu verbinden, um eine Verschwenkung der Achseinheit als Ganzes gegenüber dem Fahrgestell des Anhängers zu ermöglichen. Stattdessen ist es erfindungsgemäß vorgesehen, dass die als Ganzes lenkbare Achseinheit des Anhängers ausschließlich um eine einzige in Hochrichtung des Anhängers verlaufende Drehachse verschwenkbar am Fahrgestell des Anhängers gelagert ist. Durch die erfindungsgemäße Lösung wird eine besonders robuste und einfache Konstruktion bereitgestellt, mittels welcher die gesamte lenkbare Achseinheit als Ganzes relativ zum Fahrgestell des Anhängers verschwenkt werden kann, um den Anhänger im Bedarfsfall lenken zu können.

Die Erfindung sieht zudem vor, dass die Lageranordnung eine an der Achseinheit angeordnete, koaxial zur Drehachse verlaufende Welle aufweist, welche drehbar von zumindest einem am Fahrgestell angeordneten Lager umschlossen ist. Zwischen der Welle und dem Lager kann beispielsweise noch eine Buchse angeordnet sein, sodass die Relativbewegung zwischen der Welle und dem Lager begünstigt wird und die lenkbare Achseinheit als Ganzes besonders einfach und mit wenig Reibung gegenüber dem Fahrgestell des Anhängers verschwenkt werden kann. Durch die koaxial zur Drehachse verlaufende Welle, welche drehbar von zumindest einem am Fahrgestell angeordneten Lager umschlossen ist, wird eine besonders robuste und einfache Lageranordnung für die als Ganzes verschwenkbare Achseinheit bereitgestellt.

Des Weiteren sieht die Erfindung vor, dass ein oberes Wellenende und ein unteres Wellenende der Welle von jeweiligen am Fahrgestell angeordneten Lagern außenumfangsseitig umschlossen sind. Dadurch kann auf besonders einfache Weise sichergestellt werden, dass ein Verkippen der Welle, beispielsweise um die Längs- oder Querachse des Anhängers, verhindert wird. Denn dadurch, dass das obere und das untere Wellenende der Welle von jeweiligen am Fahrgestell angeordneten Lagern außenumfangsseitig umschlossen werden, kann die koaxial zur Drehachse verlaufende Welle besonders stabil am Fahrgestell gelagert werden.

In weiterer vorteilhafter Ausgestaltung der Erfindung ist es vorgesehen, dass die Welle abgesehen von den Wellenenden von einer Umschalung umgeben ist, welche jeweilige axiale Anschläge zur Fixierung der Welle zwischen den Lagern aufweist. Dadurch kann auf besonders zuverlässige Weise sichergestellt werden, dass die Welle in Hochrichtung, also in Richtung der Drehachse, nicht verschoben werden kann und somit besonders stabil gelagert ist. Des Weiteren kann die Umschalung, welche die Welle abgesehen von ihren Wellenenden umgibt, dazu beitragen, die Lageranordnung als ein Ganzes zu stabilisieren.

Es wäre auch möglich, dass die Lageranordnung in Form eines Drehkranzes ausgebildet ist. Mit anderen Worten ist es also auch möglich, dass die lenkbare Achseinheit beispielsweise unterhalb vom Fahrgestell mittels eines Drehschemels verdrehbar gelagert ist. Insbesondere im Zusammenhang mit dieser Ausführungsform ist es auch möglich, an der Achseinheit mehr als eine Achse, beispielsweise zwei Achsen oder auch mehr, vorzusehen. Dies kann insbesondere dann sinnvoll sein, wenn mittels des Fahrgestells des Anhängers ein besonders schwerer Anhängeraufbau, beispielsweise in Form eines besonders voluminösen Güllefasses, aufgenommen werden soll. Dadurch, dass auch mehr als eine Achse an der lenkbaren Achseinheit vorgesehen sein kann, kann die durch den Anhängeraufbau aufgebrachte Last besonders gut verteilt und aufgenommen werden.

Eine weitere vorteilhafte Ausführungsform der Erfindung sieht vor, dass die Verstelleinrichtung jeweils einen linksseitig am Fahrgestell und der Achseinheit angelenkten Hydraulikzylinder sowie einen rechtsseitig am Fahrgestell und der Achseinheit angelenkten Hydraulikzylinder aufweist. Vorzugsweise sind die Hydraulikzylinder doppelt wirkende Hydraulikzylinder, sodass ein Verschwenken beziehungsweise Lenken der lenkbaren Achseinheit nach links und rechts gegenüber dem Fahrgestell von beiden Hydraulikzylindern in die jeweiligen Richtungen unterstützt werden kann.

Das erfindungsgemäße Gespann umfasst ein Zugfahrzeug, den erfindungsgemäßen Anhänger oder eine vorteilhafte Ausführungsform des erfindungsgemäßen Anhängers, welcher am Zugfahrzeug angekoppelt ist, und ein am Anhänger angeordnetes Arbeitsgerät.

Eine vorteilhafte Ausführungsform des erfindungsgemäßen Gespanns sieht vor, dass das Gespann eine Steuervorrichtung aufweist, welche dazu ausgelegt ist, eine Lenkung des Zugfahrzeugs und die Verstelleinrichtung des Anhängers derart anzusteuern, dass das Gespann in einem Fahrmodus fährt, bei welchem jeweilige Reifen des Zugfahrzeugs und jeweilige Reifen der Achseinheit des Anhängers quer zur Fahrtrichtung des Gespanns zueinander versetzt abrollen, oder die Reifen der Achseinheit spurgetreu den Reifen des Zugfahrzeugs nachfahren. Die Steuervorrichtung als solche kann beispielsweise am Zugfahrzeug angeordnet sein. Am Zugfahrzeug kann im Bereich eines Cockpits eine entsprechende Benutzerschnittstelle beziehungsweise Eingabemöglichkeit bereitgestellt sein, mittels welcher ein Fahrer des Zugfahrzeugs den jeweiligen Fahrmodus auswählen kann, bei welchem der Anhänger entweder dem Spurfahrzeug spurgetreu folgt oder parallel zu diesem versetzt hinter dem Zugfahrzeug hergezogen wird.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind dabei auch in Alleinstellung verwendbar, ohne den Rahmen der Erfindung zu verlassen.

Die Zeichnung zeigt in:
- Fig. 1: eine Perspektivansicht eines Gespanns, welches einen Traktor aufweist, an welchem ein Anhänger angeordnet ist, an dessen Rückseite wiederum eine Bodenbearbeitungsvorrichtung angebracht ist;
- Fig. 2: eine Draufsicht auf das Gespann, wobei der Anhänger mitsamt der Bodenbearbeitungsvorrichtung spurgetreu hinter dem Traktor hergezogen wird;
- Fig. 3: eine weitere Draufsicht auf das Gespann, wobei jeweilige Reifen des Traktors und des Anhängers bezogen auf die Fahrtrichtung parallel zueinander versetzt angeordnet sind;
- Fig. 4: eine Seitenansicht auf den Anhänger, wobei der Anhängeraufbau und die Reifen des Anhängers nicht dargestellt sind;
- Fig. 5: eine Draufsicht auf den Anhänger, wiederum ohne Anhängeraufbau und Reifen, wobei eine relativ zu einem Fahrgestell des Anhängers verschwenkbare Achseinheit zu erkennen ist;
- Fig. 6: eine weitere Draufsicht auf den teilweise dargestellten Anhänger, wobei die verschwenkbare Achseinheit gerade relativ zum Fahrgestell des Anhängers verschwenkt worden ist;
- Fig. 7: eine Perspektivansicht auf den teilweise dargestellten Anhänger, wobei die verschwenkbare Achseinheit und das Fahrgestell des Anhängers dargestellt sind bevor die verschwenkbare Achseinheit am Fahrgestell montiert worden ist; und in
- Fig. 8: eine perspektivische Rückansicht der verschwenkbaren Achseinheit.

In den Figuren werden gleiche und funktionsgleiche Elemente mit den gleichen Bezugszeichen versehen.

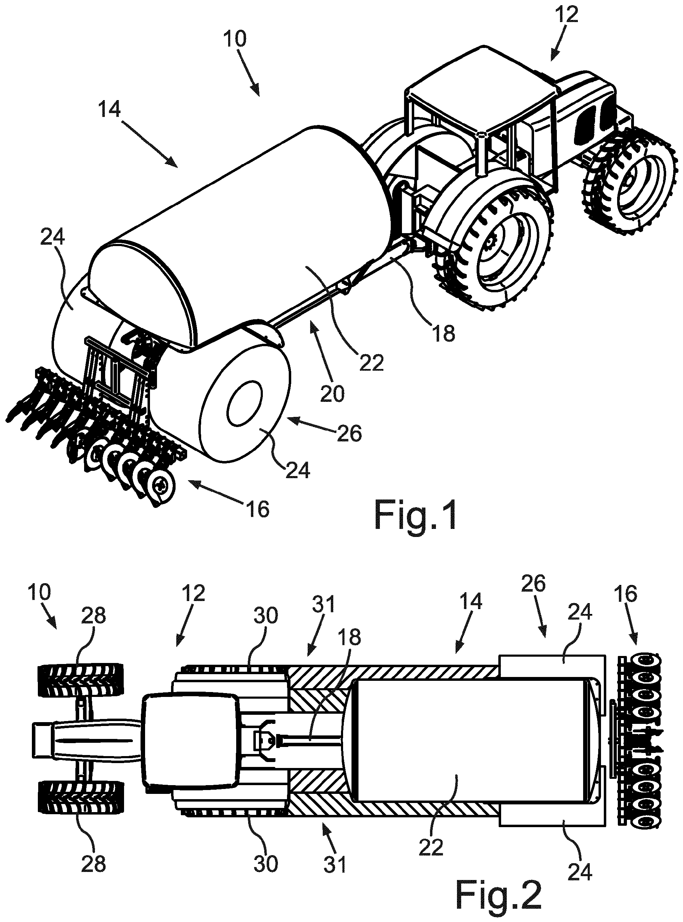

Ein insgesamt mit 10 bezeichnetes Gespann, welches einen Traktor 12, einen Anhänger 14 und eine Bodenbearbeitungsvorrichtung 16 umfasst, ist in einer Perspektivansicht in Fig. 1 gezeigt. An dem als Zugfahrzeug dienenden Traktor 12 ist der Anhänger 14 mittels einer als Deichsel ausgebildeten Zugvorrichtung 18 angekoppelt. Im vorliegenden Fall ist die Deichsel 18 starr mit einem Fahrgestell 20 des Anhängers 14 verbunden. Das Fahrgestell 20 dient zum Aufnehmen eines Anhängeraufbaus, welcher im vorliegenden Fall durch ein Güllefass 22 gebildet ist. Der Anhänger 14 umfasst zwei Reifen 24, welche an einer lenkbaren Achseinheit 26 angeordnet sind, welche als Ganzes relativ zum Fahrgestell 20 verschwenkbar ist. Am Anhänger 14 ist an einer von dem Fahrgestell 20 abgewandten Rückseite der lenkbaren Achseinheit 26 eine hier nicht näher bezeichnete Aufnahmevorrichtung angeordnet, mittels welcher die Bodenbearbeitungsvorrichtung 16 am Anhänger 14 befestigt ist. Bei der Bodenbearbeitungsvorrichtung 16 handelt es sich im vorliegenden Fall um einen sogenannten Scheibenschlitzverteiler. Mittels des Güllefasses 22 bereitgestellte Gülle kann über hier nicht dargestellte Schläuche zu den einzelnen Scheiben des Scheibenschlitzverteilers 16 befördert werden. Die einzelnen Scheiben des Scheibenschlitzverteilers 16 furchen beziehungsweise schlitzen ein zu bearbeitendes Feld und ermöglichen dadurch eine verbesserte Aufnahme der zugeführten Gülle.

In Fig. 2 ist das Gespann 10 in einer Draufsicht gezeigt, wobei der Anhänger 14 spurgetreu hinter dem Traktor 12 hinterher gezogen wird. Wie zu erkennen, befahren die linken beziehungsweise rechten Reifen 28, 30 des Traktors 12 und des Anhängers 14 jeweils die gleichen Fahrspuren 31. Mit anderen Worten ist es also möglich, dass die Reifen 24 des Anhängers 14 sowie die Reifen 28, 30 des Traktors 12 keine zusätzlichen Fahrspuren auf einem Untergrund, beispielsweise einem gerade befahrenen Feld, befahren. Stattdessen kann der Anhänger 14 derart hinter dem Traktor 12 hergezogen werden, dass die Reifen 24 des Anhängers 14 genau den Fahrspuren 31 folgen, welche durch den vorausfahrenden Traktor 12 bereits erzeugt worden sind.

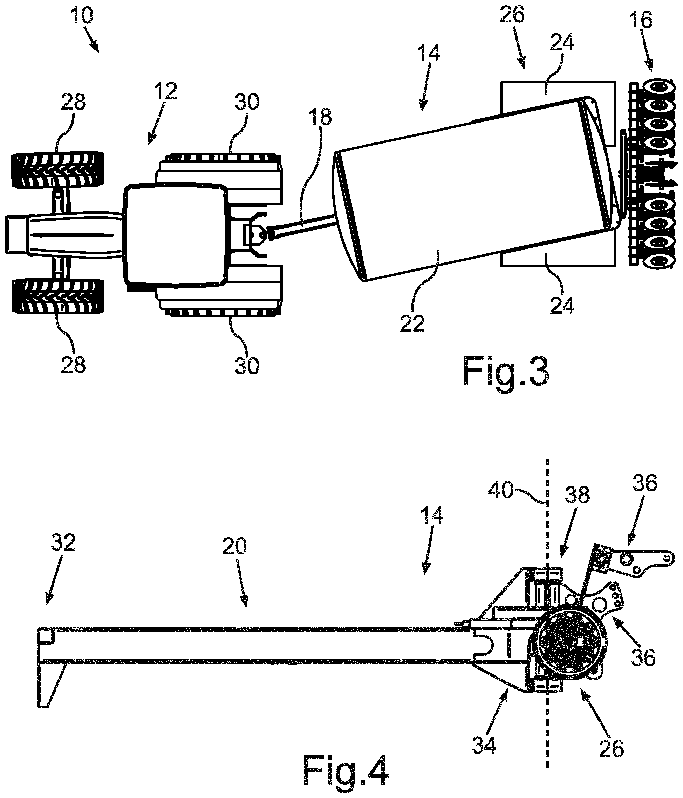

In Fig. 3 ist das Gespann 10 in einer weiteren Draufsicht gezeigt, wobei im vorliegend gezeigten Fall die Reifen 24 des Anhängers 14 und die Reifen 28, 30 des Traktors 12 parallel zueinander versetzt abrollen. Mit anderen Worten ist es also möglich, dass das gesamte Gespann 10 in einem sogenannten Hundegang gefahren wird, bei welchem die Reifen 24 des Anhängers 14 parallel versetzt zu den Reifen 28, 30 des Traktors 12 abrollen. Dies ist insbesondere dann vorteilhaft, wenn der durch das Gespann 10 befahrene Boden geschont werden soll. Dadurch, dass die Reifen 24 des Anhängers 14 und die Reifen 28, 30 des Traktors 12 unterschiedliche Spuren befahren, wird der befahrene Boden nicht über die Maßen stark verdichtet und dadurch geschont.

In Fig. 4 ist der Anhänger 14 in einer Seitenansicht gezeigt, wobei die Reifen 24 und das Güllefass 22 nicht dargestellt sind. Die als Zugvorrichtung dienende Deichsel 18 ist im vorliegenden Fall ebenfalls nicht dargestellt. Die Deichsel 18 wird an einem vorderen Bereich 32 des Fahrgestells 20 montiert. An einem hinteren Bereich 34 des Fahrgestells 20 ist die als Ganzes relativ zum Fahrgestell 20 verschwenkbare und somit lenkbare Achseinheit 26 angeordnet. Rückseitig an der lenkbaren Achseinheit 26 sind mehrere Anbindungspunkte 36 vorgesehen, an welchen die als Scheibenschlitzverteiler ausgebildete Bodenbearbeitungsvorrichtung 16 angebracht werden kann. Die Achseinheit 26 ist dabei mittels einer Lageranordnung 38 am Fahrgestell 20 gelagert, welche einen Drehfreiheitsgrad um eine einzige in Hochrichtung z des Anhängers 14 verlaufende Drehachse 40 aufweist.

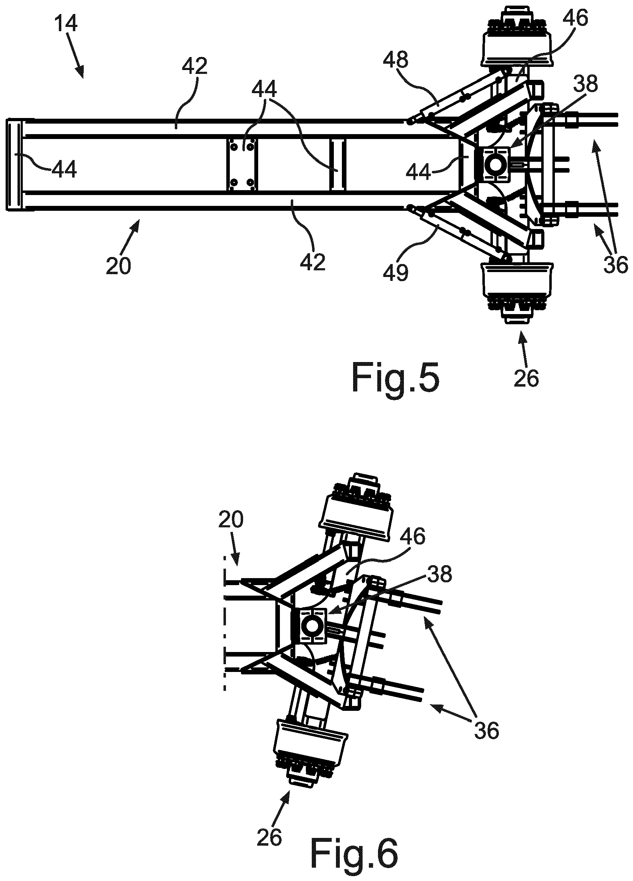

In Fig. 5 ist der teilweise dargestellte Anhänger 14 in einer Draufsicht gezeigt. Wie zu erkennen, ist das Fahrgestell 20 als eine Art Leiterrahmen ausgebildet, wobei zwischen zwei Längsholmen 42 mehrere Querstreben 44 angeordnet sind. Wie zu erkennen, umfasst die lenkbare Achseinheit 26 in der vorliegenden Ausführungsform lediglich eine einzige Achse 46, an welcher die Reifen 24 angebracht werden. Eine Ausführungsform mit beispielsweise zwei Achsen, welche als Ganzes relativ zum Fahrgestell 20 verschwenkbar sind, wäre aber ebenfalls möglich.

Der Anhänger 14 umfasst zudem eine nicht näher bezeichnete Verstelleinrichtung, welche jeweils einen rechtsseitig am Fahrgestell 20 und der Achseinheit 26 angelenkten Hydraulikzylinder 48 sowie einen linksseitig am Fahrgestell 20 und der Achseinheit 26 angelenkten Hydraulikzylinder 49 aufweist. Die Hydraulikzylinder 48, 49 sind vorzugsweise als doppelt wirkende Hydraulikzylinder ausgebildet.

In Fig. 6 ist der Anhänger 14 wiederum teilweise in einer Draufsicht gezeigt, wobei die Achseinheit 26 durch entsprechendes Betätigen der Hydraulikzylinder 48, 49 relativ zum Fahrgestell 20 verschwenkt worden ist. Das Gespann 10 umfasst dabei eine nicht näher dargestellte Steuervorrichtung, welche dazu ausgelegt ist, eine Lenkung des Traktors 12 und die Verstelleinrichtung des Anhängers 14, welche die beiden Hydraulikzylinder 48, 49 umfasst, derart anzusteuern, dass das Gespann 14 entweder in einem Fahrmodus fährt, bei welchem der Anhänger 14 spurgetreu dem Traktor 12 nachgeführt wird, wie in Fig. 2 dargestellt, oder das Gespann 10 in einem Fahrmodus fährt, bei welchem die Reifen 24 der lenkbaren Achseinheit 26 des Anhängers 14 seitlich parallel versetzt zu den Reifen 28, 30 des als Zugfahrzeug dienenden Traktors 12 nachfahren, wie in Fig. 3 dargestellt. Die Steuervorrichtung kann dabei beispielsweise mitsamt einer entsprechenden Bedieneinheit am Traktor 12 angebracht sein, sodass ein Fahrer des Traktors 12 bequem von dem Traktor 12 aus die verschiedenen Fahrmodi anwählen kann.

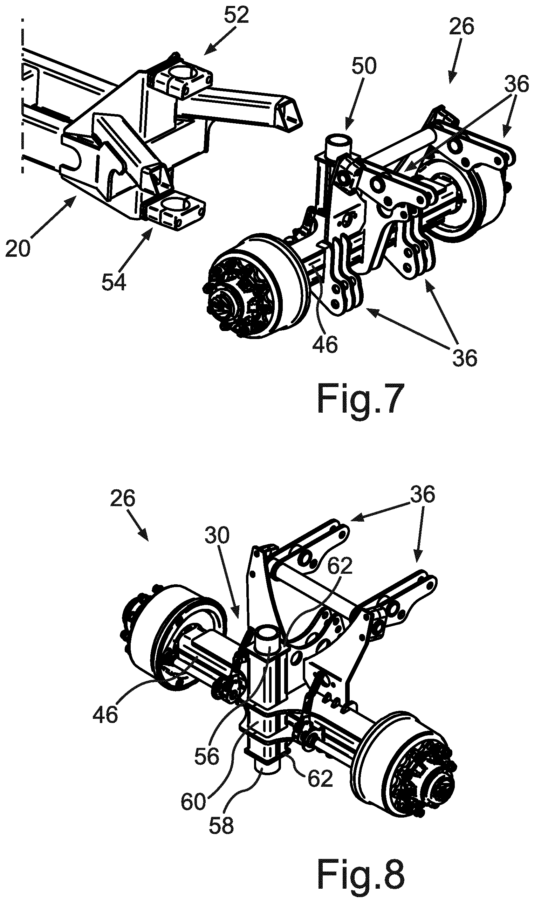

In Fig. 7 sind das Fahrgestell 20 und die lenkbare Achseinheit 26 in einer Perspektivansicht gezeigt, wobei die lenkbare Achseinheit 26 noch nicht an dem Fahrgestell 20 montiert worden ist. Die hier nicht näher gekennzeichnete, zuvor bereits erwähnte Lageranordnung 38 umfasst eine an der lenkbaren Achseinheit 26 angeordnete, koaxial zur (in Fig. 4 gekennzeichneten) verlaufenden Drehachse 40 verlaufende Welle 50, welche von zwei am Fahrgestell 20 angeordneten Lagern 52, 54 im montierten Zustand umschlossen wird.

In Fig. 8 ist die als Ganzes lenkbare Achseinheit 26 in einer perspektivischen Rückansicht gezeigt. In der vorliegenden Darstellung ist gut zu erkennen, dass die Welle 50 abgesehen von einem oberen Wellenende 56 und einem unteren Wellenende 58 von einer quaderförmigen Umschalung 60 umgeben ist, welche jeweilige axiale, kragenartige Anschläge 62 zur Fixierung der Welle 50 zwischen den Lagern 52, 54 aufweist.

Die am Fahrgestell 20 angeordneten Lager 52, 54 sind, wie angedeutet, zweiteilig ausgebildet, welche beispielsweise durch entsprechende, hier nicht näher gekennzeichnete Verschraubungen gelöst beziehungsweise geöffnet werden können. Die Anschläge 62 werden in Hochrichtung z des Anhängers 10 zwischen den geöffneten Lagern 52, 54 positioniert und anschließend können die Lager 52, 54 wieder geschlossen werden, sodass die oberen und unteren Wellenenden 56, 58 außenumfangsseitig von den Lagern 52, 54 umschlossen werden. Die durch die Welle 50 und die Lager 52, 54 gebildete Lageranordnung 38 ist besonders robust und somit funktionssicher. Für die Lagerung der Achseinheit 26 sind zudem besonders wenige Teile erforderlich.

### BEZUGSZEICHENLISTE:

- 10: Gespann
- 12: Traktor
- 14: Anhänger
- 16: Bodenbearbeitungsvorrichtung
- 18: Zugvorrichtung
- 20: Fahrgestell
- 22: Güllefass
- 24: Reifen
- 26: Achseinheit
- 28: Reifen
- 30: Reifen
- 31: Fahrspur
- 32: vorderer Bereich
- 34: hinterer Bereich
- 36: Befestigungspunkt
- 38: Lageranordnung
- 40: Drehachse
- 42: Längsholm
- 44: Querstrebe
- 46: Achse
- 48: Hydraulikzylinder
- 49: Hydraulikzylinder
- 50: Welle
- 52: Lager
- 54: Lager
- 56: oberes Wellenende
- 58: unteres Wellenende
- 60: Umschalung
- 62: axialer Anschlag
- z: Hochrichtung

## Patentansprüche

1. Anhänger (14), insbesondere landwirtschaftlicher Anhänger, umfassend
- ein Fahrgestell (20) zum Aufnehmen eines Anhängeraufbaus (22);
- eine an einem vorderen Bereich (32) des Fahrgestells (20) angeordnete Zugvorrichtung (18) zum Verbinden des Anhängers (14) mit einem Zugfahrzeug (12);
- eine an einem hinteren Bereich (34) des Fahrgestells (20) angeordnete, wenigstens eine Achse (46) aufweisende lenkbare Achseinheit (26), welche als Ganzes relativ zum Fahrgestell (20) verschwenkbar ist;
- eine Verstelleinrichtung zum Verschwenken der Achseinheit (26) relativ zum Fahrgestell (20);
- wobei die Achseinheit (26) mittels einer Lageranordnung (38) am Fahrgestell (20) gelagert ist, welche einen Drehfreiheitsgrad um eine einzige in Hochrichtung (z) des Anhängers (14) verlaufende Drehachse (40) aufweist;
- wobei die Lageranordnung (38) eine an der Achseinheit (26) angeordnete, koaxial zur Drehachse (40) verlaufende Welle (50) aufweist, welche drehbar von zumindest einem am Fahrgestell (20) angeordneten Lager (52, 54) umschlossen ist
**dadurch gekennzeichnet, dass**
- der Anhänger eine an einer von dem Fahrgestell (20) abgewandten Rückseite der lenkbaren Achseinheit (26) angeordnete Aufnahmevorrichtung aufweist, mittels welcher ein Arbeitsgerät, insbesondere eine Bodenbearbeitungsvorrichtung (16), am Anhänger (14) befestigbar ist;
- ein oberes Wellenende (56) und ein unteres Wellenende (58) der Welle (50) von jeweiligen am Fahrgestell (20) angeordneten Lagern (52, 54) außenumfangsseitig umschlossen sind.

2. Anhänger (14) nach einem dem vorhergehenden Anspruch,
**dadurch gekennzeichnet, dass**
die Welle (50) abgesehen von den Wellenenden (56, 58) von einer Umschalung (60) umgeben ist, welche jeweilige axiale Anschläge (62) zur Fixierung der Welle (50) zwischen den Lagern (52, 54) aufweist.

3. Anhänger (14) nach einem der vorhergehenden Ansprüche,
**dadurch gekennzeichnet, dass**
die Verstelleinrichtung jeweils einen linksseitig am Fahrgestell (20) und der Achseinheit (26) angelenkten Hydraulikzylinder (49) sowie einen rechtsseitig am Fahrgestell (20) und der Achseinheit (26) angelenkten Hydraulikzylinder (48) aufweist.

4. Anhänger (14) nach Anspruch 3,
**dadurch gekennzeichnet, dass**
die Hydraulikzylinder (48, 49) doppeltwirkende Hydraulikzylinder sind.

5. Gespann (10) mit einem Zugfahrzeug (12), einem am Zugfahrzeug (12) angekoppelten Anhänger (14) nach einem der vorhergehenden Ansprüche und einem am Anhänger (14) angeordneten Arbeitsgerät.

6. Gespann (10) nach Anspruch 5,
**dadurch gekennzeichnet, dass**
das Gespann (10) eine Steuervorrichtung aufweist, welche dazu ausgelegt ist, eine Lenkung des Zugfahrzeugs (12) und die Verstelleinrichtung des Anhängers (14) derart anzusteuern, dass
- das Gespann (10) in einem Fahrmodus fährt, bei welchem jeweilige Reifen (28, 30) des Zugfahrzeugs (12) und jeweilige Reifen (24) der Achseinheit (26) des Anhängers (14) quer zur Fahrtrichtung des Gespanns (10) zueinander versetzt abrollen; oder
- das Gespann (10) in einem Fahrmodus fährt, bei welchem die Reifen (24) der Achseinheit (26) spurgetreu den Reifen (28, 30) des Zugfahrzeugs (12) nachfahren.

## Claims

1. A trailer (14), in particular agricultural trailer, including
- a chassis (20) for receiving a trailer body (22);
- a towing device (18) arranged in a front area (32) of the chassis (20) for connecting the trailer (14) to a towing vehicle (12);
- a steerable axle unit (26) comprising at least one axle (46), arranged in a rear area (34) of the chassis (20), which is pivotable relative to the chassis (20) as a whole,
- an adjusting device for pivoting the axle unit (26) relative to the chassis (20);
- wherein the axle unit (26) is supported on the chassis (20) by means of a bearing assembly (38), which has a rotational degree of freedom around a single rotational axis (40) extending in vertical direction (z) of the trailer (14);
- wherein the bearing assembly (38) comprises a shaft (50) extending coaxially with the rotational axis (40), arranged at the axle unit (26), which is rotatably enclosed by at least one bearing (52, 54) arranged at the chassis (20),
**characterized in that**
- the trailer comprises a receiving device arranged on a rear side of the steerable axle unit (26) facing away from the chassis (20), by means of which a working equipment, in particular a soil cultivation device (16), is attachable to the trailer (14);
- an upper shaft end (56) and a lower shaft end (58) of the shaft (50) are enclosed on the outer circumferential side by respective bearings (52, 54) arranged at the chassis (20).

2. The trailer (14) according to the preceding claim,
**characterized in that**
the shaft (50) is surrounded by a casing (60) except for the shaft ends (56, 58), which comprises respective axial stops (62) for fixing the shaft (50) between the bearings (52, 54).

3. The trailer (14) according to any one of the preceding claims,
**characterized in that**
the adjusting device respectively comprises a hydraulic cylinder (49) hinged to the chassis (20) and the axle unit (26) on the left side as well as a hydraulic cylinder (48) hinged to the chassis (20) and the axle unit (26) on the right side.

4. The trailer (14) according to claim 3,
**characterized in that**
the hydraulic cylinders (48, 49) are double-acting hydraulic cylinders.

5. A vehicle/trailer combination (10) with a towing vehicle (12), a trailer (14) coupled to the towing vehicle (12) according to any one of the preceding claims and a working equipment arranged at the trailer (14).

6. The vehicle/trailer combination (10) according to claim 5,
**characterized in that**
the vehicle/trailer combination (10) comprises a control device, which is adapted to control a steering of the towing vehicle (12) and the adjusting device of the trailer (14) such that
- the vehicle/trailer combination (10) moves in a travel mode, in which respective tires (28, 30) of the towing vehicle (12) and respective tires (24) of the axle unit (26) of the trailer (14) roll off offset to each other transverse to the direction of travel of the vehicle/trailer combination (10); or
- the vehicle/trailer combination (10) moves in a travel mode, in which the tires (24) of the axle unit (26) track the tires (28, 30) of the towing vehicle (12) in directionally stable manner.

## Revendications

1. Remorque (14), en particulier remorque agricole, comprenant
- un châssis (20), destiné à loger une structure de remorque (22) ;
- un mécanisme de traction (18), agencé sur une zone avant (32) du châssis (20), destiné à relier la remorque (14) à un véhicule tracteur (12) ;
- une unité formant essieu (26) dirigeable, agencée sur une zone arrière (34) du châssis (20), présentant au moins un essieu (46), laquelle peut pivoter dans son ensemble par rapport au châssis (20) ;
- un dispositif de déplacement, destiné à faire pivoter l'unité formant essieu (26) par rapport au châssis (20) ;
- l'unité formant essieu (26) étant placée sur le châssis (20) au moyen d'un agencement de paliers (38), lequel présente un degré de liberté en rotation autour d'un seul axe de rotation (40), évoluant dans le sens de la hauteur (z) de la remorque (14) ;
- l'agencement de paliers (38) présentant un arbre (50), agencé sur l'unité formant essieu (26), évoluant coaxialement par rapport à l'axe de rotation (40), lequel est enserré à pivotement par au moins un palier (52, 54), agencé sur le châssis (20),
**caractérisée en ce que**
- la remorque présente un mécanisme de ramassage, agencé sur une face arrière, éloignée du châssis (20), de l'unité formant essieu dirigeable (26), au moyen duquel un outil de travail, en particulier un mécanisme de travail de la terre (16), peut être fixé sur la remorque (14) ;
- une extrémité supérieure (56) d'arbre et une extrémité inférieure (58) d'arbre de l'arbre (50) sont enserrées sur la face périphérique extérieure par des paliers (52, 54) respectifs, agencés sur le châssis (20).

2. Remorque (14) selon la revendication précédente,
**caractérisée en ce que**
l'arbre (50) est entouré, en dehors des extrémités (56, 58) d'arbre, par une enceinte (60), laquelle présente des butées axiales (62) respectives, destinées à immobiliser l'arbre (50) entre les paliers (52, 54).

3. Remorque (14) selon l'une des revendications précédentes,
**caractérisée en ce que**
le dispositif de déplacement présente respectivement un vérin hydraulique (49), articulé côté gauche sur le châssis (20) et l'unité formant essieu (26), ainsi qu'un vérin hydraulique (48), articulé côté droite sur le châssis (20) et l'unité formant essieu (26).

4. Remorque (14) selon la revendication 3,
**caractérisée en ce que**
les vérins hydrauliques (48, 49) sont des vérins hydrauliques à double effet.

5. Attelage (10) avec un véhicule tracteur (12), une remorque (14), couplée au véhicule tracteur (12), selon l'une des revendications précédentes et un outil de travail, agencé sur la remorque (14).

6. Attelage (10) selon la revendication 5,
**caractérisé en ce que**
l'attelage (10) présente un mécanisme de commande, lequel est conçu pour piloter une direction du véhicule tracteur (12) et le dispositif de déplacement de la remorque (14), de telle sorte que
- l'attelage (10) roule en mode conduite, pour lequel des pneus (28, 30) respectifs du véhicule tracteur (12) et des pneus (24) respectifs de l'unité formant essieu (26) de la remorque (14) se déplacent décalés les uns par rapport aux autres, transversalement par rapport à la trajectoire de l'attelage (10) ou
- l'attelage (10) roule en mode conduite, pour lequel les pneus (24) de l'unité formant essieu (26) suivent précisément les traces des pneus (28, 30) du véhicule tracteur (12).
